# FASCICULE DE BREVET EUROPEEN

(11) **EP 0 405 353 B1**
(45) Date de publication et mention de la délivrance du brevet: **15.06.1994**
(21) Numéro de dépôt: 90111864.6
(22) Date de dépôt: 22.06.1990
(51) Int. Cl.: H04L 12/40

(54) **Dispositif de protection pour système de transmission de signaux numériques**
Schutzvorrichtung für Übertragungssysteme digitaler Signale
Protection device for digital signal transmission systems

(30) Priorité: 30.06.1989 FR 8908825
(43) Date de publication de la demande: 02.01.1991
(73) Titulaire: ALCATEL CIT, 75008 Paris (FR)
(72) Inventeur: Beaufils, Jean-Marie, F-75014 Paris (FR); Sammut, Joseph, F-91620 Nozay (FR)
(74) Mandataire: Weinmiller, Jürgen

(56) Documents cités:
- DE-A- 3 304 105

## Description

La présent invention concerne un dispositif de protection pour système de transmission de signaux numériques en cas de panne affectant les équipements constituant ce système.

L'invention s'applique notamment à un système de transmission de signaux numériques entre un équipement terminal interrogateur et "n" équipements terminaux répondeurs, dans lequel au moins les réponses aux interrogations s'effectuent sur un support de transmission commun aux "n" équipements répondeurs.

Une telle configuration se rencontre par exemple dans le cas de transmission de signaux numériques entre un équipement terminal interrogateur et "n" équipements terminaux répondeurs réalisés sous forme de cartes regroupées dans un même châssis pour former un ensemble fonctionnel complexe tel qu'un ensemble multiplexeur-démultiplexeurìde signaux numériques, cette transmission étant par exemple effectuée en vue d'une centralisation, par la carte d'équipement interrogateur, d'informations d'alarmes relatives à certaines défaillances de fonctionnement des cartes d'équipement répondeurs.

Ces cartes d'équipement comportant des circuits logiques nécessitant pour leur fonctionnement une alimentation par une source de tension continue, il est généralement prévu sur chacune d'elles un fusible destiné à couper cette alimentation lorsque ces cartes sont exposées à un risque de détérioration, du fait de surtensions ou de surintensités par exemple. Ces coupures d'alimentation correspondent aux pannes dont il a été question ci-dessus.

Suivant la technologie des circuits logiques utilisés dans cet équipement un problème peut alors se poser . En effet, lorsqu'ils sont réalisés selon certaines technologies, telles que la technologie HCMOS, qu'il est en particulier très intéressant d'utiliser en raison de la faible consommation électrique et du coût modéré des circuits, ils peuvent, en l'absence d'alimentation proprement dite, continuer à être alimentés par les signaux numériques qui leur sont appliqués pour traitement, ce phènomène étant connu sous le nom de phénomène d'auto-alimentation.
Dans une configuration telle que décrite ci-dessus, comportant un support de transmission commun, ce phénomène d'auto-alimentation peut causer de graves perturbations, pouvant aller jusqu'à des détériorations de circuits. En effet, il y a alors risque de réponse simultanée sur le support de transmission commun par plusieurs équipements répondeurs, soit directement du fait d'une panne affectant certains d'entre eux, soit indirectement du fait d'une panne affectant l'équipement interrogateur qui peut alors interroger simultanément plusieurs équipements répondeurs.

La présente invention a pour objet un dispositif de protection permettant d'apporter une solution à ce problème.

Il est par ailleurs connu, du document DE-A-3304105, un dispositif de protection pour système de transmission de signaux numériques, comportant dans au moins un des équipements terminaux de ce système un circuit logique assurant, en cas de coupure d'alimentation des circuits logiques formant cet équipement, une mise de la sortie de cet équipement à l'état haute impédance.

La présente invention a pour objet un dispositif de protection pour système de transmission de signaux numériques, tel que défini dans les revendications.

D'autres objets et caractéristiques de la présente invention apparaîtront plus clairement à la lecture de la description suivante d'exemples de réalisation, faite en relation avec les dessins ci-annexés dans lesquels :
- la figure 1 est un schéma d'un dispositif de protection suivant l'invention
- la figure 2 représente une variante de réalisation du schéma de la figure 1.

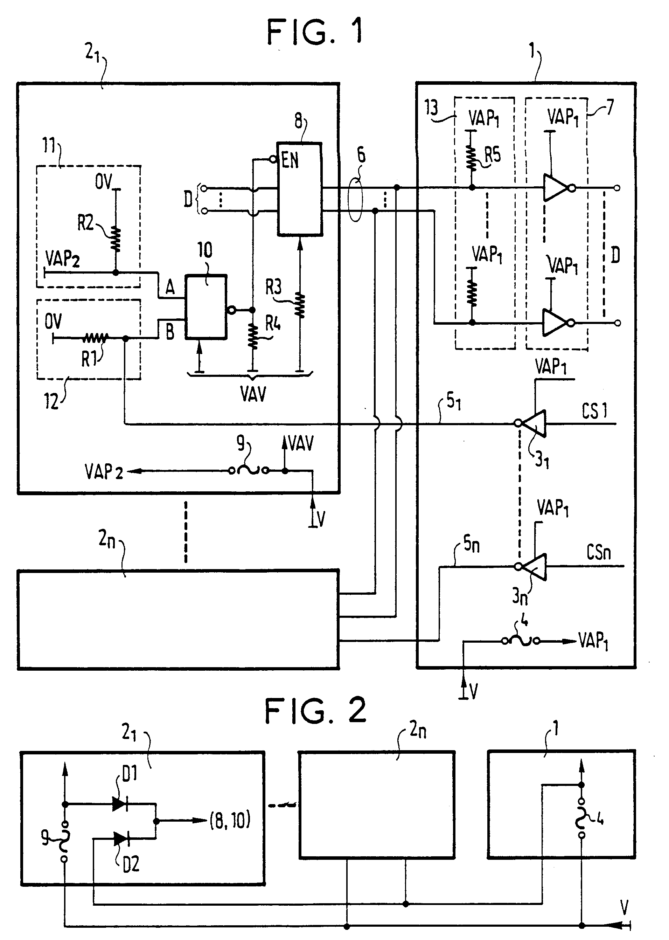

Sur la figure 1 est représenté schématiquement le dispositif de protection prévu dans l'équipement interrogateur 1 et dans l'un des équipements répondeurs 21, les élémênts du dispositif de protection prévus dans les autres équipements répondeurs 22....2n étant identiques à ceux prévus dans ce dernier et n'ayant pas été représentés pour une meilleure clarté du dessin.

Les signaux d'interrogation CS1...CSn, élaborés dans l'équipement interrogateur par un ensemble de circuits non representés car ne faisant pas partie de l'invention, sont appliqués respectivement à n circuits logiques 31...3n réalisés en technologie non sujette au phénomène d'auto-alimentation, en technologie TTL par exemple, et alimentés par une tension référencée VAP1 obtenue en aval d'un fusible 4 prévu sur cet équipement, une tension continue V alimentant ce fusible en amont.

Les signaux d'interrogation obtenus en sortie de ces circuits logiques 31-3n sont respectivement appliqués aux équipements répondeurs 21-2n par "n" fils 51-5n. En cas de rupture du fusible 4 de la carte d'équipement, ces circuits n'étant plus alimentés, un niveau de tension déterminé, caractéristique de cet état, est obtenu à la sortie de ces circuits.

Inversement, les réponses des équipements répondeurs 21-2n sont acheminées vers l'équipement interrogateur par un support de transmission commun constitué ici par un bus 6 à "p" fils en parallèle et sont appliquées, à leur entrée dans cet équipement, à un circuit logique 7 pouvant être réalisé en technologie sujette ou non au phénomène d'auto-alimentation ( le problème se posant en effet ici de façon moins aigüe que pour l'accès au bus commun) et alimenté comme les circuits logiques 31-3n, c'est à dire alimenté seulement en l'absence de coupure d'alimentation par la tension VAP1. Le circuit logique 7 comporte autant de circuits logiques individuels identiques qu'il y a de fils dans le bus, affectés chacun à l'un des fils du bus.
les circuits logiques 31....3n et 7 présentant les caractéristiques ainsi énoncées pourraient être formés directement par les circuits logiques terminaux de l'ensemble des circuits d'élaboration des signaux d'interrogation CS1-CSn ou de traitement des données de réponse D des équipements répondeurs. Ces circuits logiques 31...3n et les circuits logiques individuels du circuit 7 sont par ailleurs, dans l'exemple considéré, constitués par des inverseurs.

Les données de réponse D, élaborées dans l'équipement répondeur 21 par un ensemble de circuits représenté car ne faisant pas partie de l'invention, sont appliquées, avant leur transmission sur le bus 6, à un circuit logique 8 muni d'une entrée EN de commande de validation ou de mise de sa sortie à l'état haute impédance. Ce circuit logique 8 est réalisé en technologie pouvant ou non être sujette au phénomène d'auto-alimentation (par exemple en technologie HCMOS ou TTL) et est alimenté par une tension VAV obtenue en amont d'un fusible 9 prévu sur cet équipement, une tension continue V alimentant ce fusible en amount. Il est, comme le circuit 7, formé d'autant de circuits logiques individuels qu'il y a de fils dans le bus 6 et qu'il y a de fils pour lui appliquer les données D, affectés chacun à un fil d'application des données D et un fil du bus 6. Ces circuits logiques individuels, non représentés séparément, peuvent être constitué respectivement de circuits tampon trois états dont les entrées de commande de validation ou de mise à l'état haute impédance de leur sortie sont connectées en commun pour former une entrée de commande EN du circuit logique 8.

Bien entendu, si la transmission depuis chaque équipement répondeur vers l'équipement interrogateur s'effectuait en mode série sur un bus à un fil, les circuits logiques 7 et 8 seraient réduits chacun à un seul circuit individuel.

Sur l'entrée EN de commande de validation ou de mise à l'état haute impédance du circuit logique 8 est appliqué un signal obtenu en sortie d'un circuit logique 10 de détection de coïncidence entre une interrogation de cet équipement par l'équipement interrogateur et une absence de rupture du fusible 9, la validation du circuit logique 8 devant être assurée en cas de détection de coïncidence et la mise de sa sortie à l'état haute impédance devant être assurée en cas contraire.

Ce circuit logique 10 est également réalisé en technologie pouvant être ou non sujette au phénomène d'auto-alimentation, et alimenté en permanence par la tension VAV obtenue en amont du fusible 9. Dans l'exemple considéré, ce circuit logique 10 est une porte "non ET".

Une des entrées,A, de cette porte est connectée à la sortie d'un circuit 11 de détection de coupure d'alimentation affectant l'équipement répondeur 21, c'est à dire de détection de rupture du fusible 9, formé en l'occurence par la mise simultanée, sur le point A, d'une part de la tension VAP2 en aval du fusible 9, d'autre part de la tension à l'une des bornes d'une résistance R2 dont l'autre borne est à la tension de référence OV.

Une autre entrée, B, de cette porte reçoit le signal d'interrogation relatif à l'équipement répondeur considéré, en l'occurence le signal CS1, via un circuit 12 d'identification de rupture du fusible 4, prévu sur l'équipement interrogateur, à une absence d'interrogation. Ce circuit 12 est en l'occurence constitué par la mise simultanée, sur le point B, d'une part du signal d'interrogation, d'autre part du potentiel à l'une des bornes d'une résistance R1 dont l'autre borne est au potentiel de référence OV.

Il peut y avoir avantage à choisir un circuit logique 8 réalisé en technologie sujette au phénomène d'auto-alimentation, par exemple en technologie HCMOS, et un circuit logique 10 réalisé en technologie non sujette au phénomène d'auto-alimentation, par exemple en technologie TTL.

En effet les circuits logiques réalisés en technologie TTL ont, en contrepartie de leur faible temps de propagation, l'inconvénient d'être onéreux, et de consommer beaucoup, ce dernier inconvénient étant particulièrement sensible pour des circuits logiques comme le circuit 8 réalisant une fonction de mise de leur sortie à l'état haute impédance. La réalisation du circuit 10 en technologie TTL permet alors de limiter le temps de propagation global qui risquerait, sinon, de devenir critique vis à vis de l'équipement interrogateur en attente de réponse. Par ailleurs le choix pour le circuit logique 10 de la même technologie que celle du circuit logique 31 évite d'avoir à effectuer entre ces deux circuits une adaption de niveaux logiques qui serait relativement complexe du fait de la présence du circuit d'identification 12.

Dans le cas où le circuit logique 8 est réalisé en technologie HCMOS et où le circuit logique 10 est réalisé en technologie TTL, l'adaption des niveaux logiques "1" qu'il y a alors à effecteur entre ces deux circuits est réalisée à l'aide d'une résistance R4 connectée au point commun à la sortie du circuit logique 10 et à l'entrée de validation du circuit logique 8, l'autre borne de la résistance R4 étant au potentiel VAV d'amont du fusible 9.

En cas de rupture du fusible 4 de l'équipement interrogateur, les circuits logiques 31 à 3n et 7 de cet équipement n'étant plus alimentés, mais étant réalisés en technologie non sujette au phénomène d'auto-alimentation, aucun risque d'interrogation simultanée des équipements répondeurs ne se produit.

Par ailleurs les équipements répondeurs identifiant ce rupture de fusible à une absence d'interrogation, aucune réponse n'est émise vers l'équipement interrogateur.

En cas de rupture du fusible 9 d'un équipement répondeur, les circuits logiques 8 et 10 de cet équipement continuant à être alimentés pour assurer la mise à l'état haute impédance de la sortie de cet équipement, aucun risque de réponse de cet équipement, dû au phénomène d'auto-alimentation pouvant l'affecter, ne se produit, et un éventuel conflit d'accès au bus commun est ainsi évité.

Une résistance R3 peut par ailleurs être prévue sur l'entrée d'alimentation du circuit logique 8, pour limiter le courant d'alimentation de ce circuit non protégé par fusible.

Comme représenté sur la figure 1, le dispositif de protection prévu sur l'équipement interrogateur peut par ailleurs comporteur un circuit 13 de détection de coupure d'alimentation affectant un équipement répondeur interrogé, c'est-à-dire de détection de rupture du fusible 9 de l'équipement répondeur interrogé. Ce circuit 13 comporte, en parallèle sur chaque borne d'entrée du circuit logique 7 reliée à un fil du bus 6, une résistance telle que R5 alimentée par la tension VAP1 obtenue en aval du fusible 4. Cette résistance R5 impose, au moment de la réponse de l'équipement répondeur affecté par une rupture de fusible et ayant par conséquent sa sortie à l'état haute impédance, un niveau logique déterminé sur la borne d'entrée correspondante du circuit logique 7.

L'alimentation en permanence des deux circuits logiques 8 et 10 risquant, avec une probabilité faible mais non nulle, de provoquer une dégradation de ces circuits, il peut être avantageux d'utiliser la variante de réalisation décrite maintenant en relation avec la figure 2. Sur cette figure, l'alimentation des circuits 8 et 10 est prise sur chacun des équipements répondeurs en aval du fusible 9 et non plus en amont, et il est par ailleurs prévu une alimentation supplémentaire de ces circuits par la tension obtenue en aval du fusible 4 de l'équipement interrogateur. Deux diodes D1 et D2 permettent un couplage de ces deux alimentations, ces diodes étant connectées par l'une de leur bornes à l'entrée d'alimentation des circuits 8 et 10, et par l'autre borne, respectivement en aval du fusible 4 et du fusible 9.

Une autre solution consisterait à assurer l'alimentation des circuits logiques 8 et 10 par la tension obtenue en aval d'un fusible exclusivement affecté à ces circuits.

## Revendications

1. Dispositif de protection pour système de transmission de signaux numériques, comportant dans au moins un des équipements terminaux (21,...2n, 1) de ce système un circuit logique (8, 31... 3n) assurant, en cas de coupure d'alimentation des circuits logiques formant cet équipement, une mise de la sortie de cet équipement à l'état haute impédance, caractérisé en ce que ladite mise de la sortie de cet équipement à l'état haute impédance est assurée dans le cas où ledit circuit logique est réalisé en technologie sujette ou non au phénomène d'autoalimentation et est alimenté en l'absence et en présence de coupure d'alimentation affectant l'équipement considéré, et en ce que ledit circuit logique assure par ailleurs, en cas de coupure d'alimentation des circuits logiques formant cet équipement, une mise de la sortie de cet équipement à un potentiel déterminé, dans le cas où ledit circuit logique est réalisé en technologie non sujette au phénomène d'autoalimentation et est alimenté seulement en l'absence de coupure d'alimentation affectant l'équipement considéré.

2. Dispositif selon la revendication 1, caractérisé en ce que ledit circuit logique (31,... 3n) est un inverseur réalisé en technologie non sujette au phénomène d'autoalimentation et est alimenté seulement en l'absence de coupure d'alimentation affectant l'équipement considéré.

3. Dispositif selon la revendication 1, caractérisé en ce que ledit circuit logique (8) est réalisé en technologie sujette ou non au phénomène d'auto-alimentation, est alimenté en l'absence et en présence de coupure d'alimentation affectant l'équipement considéré, et est muni d'une entrée de commande assurant soit une mise de sa sortie à l'état haute impédance, soit une validation de ce circuit, et en ce que ledit dispositif comporte en outre, dans l'équipement considéré, un circuit (11) de détection de coupure d'alimentation affectant cet équipement, commandant en cas de détection de coupure d'alimentation la mise à l'état haute impédance de la sortie du circuit logique à entrée de commande.

4. Dispositif selon la revendication 1, pour transmission de signaux numériques entre un équipement interrogateur (1) et "n" équipements répondeurs (21,... 2n) lesdits équipements répondeurs étant interrogés à tour de rôle sur "n" supports de transmission distincts (51,... 5n) et répondant sur un support de transmission commun (6), caractérisé en ce qu'il comporte dans l'équipement interrogateur "n" circuits logiques (31,... 3n) réalisés en technologie non sujette au phénomène d'autoalimentation et alimentés seulement en l'absence de coupure d'alimentation affectant l'équipement considéré, associés respectivement à ces "n" supports.

5. Dispositif selon la revendication 1, pour transmission de signaux numériques entre un équipement interrogateur (1) et "n" équipements répondeurs (21,... 2n), lesdits équipements répondeurs étant interrogés à tour de rôle sur "n" supports de transmission distincts et répondant sur un support de transmission commun, caractérisé en ce qu'il comporte dans chaque équipement répondeur un circuit logique (8) à entrée de commande et un circuit (11) de détection de coupure d'alimentation suivant la revendication 3, et en ce que ledit circuit de détection de coupure d'alimentation est relié à l'entrée de commande du circuit logique à entrée de commande à travers un circuit (10) de détection de coïncidence entre une interrogation concernant l'équipement répondeur considéré et une absence de coupure d'alimentation affectant cet équipement, ledit circuit de détection de coïncidence commandant la validation du circuit logique à entrée de commande en cas de détection de coïncidence et la mise de la sortie de celui-ci à l'état haute impédance dans le cas contraire.

6. Dispositif selon la revendication 5, caractérisé en ce que ledit circuit (10) de détection de coïncidence est constitué par un circuit logique réalisé en technologie sujette ou non au phénomène d'auto-alimentation, et alimenté en l'absence et en présence de coupure d'alimentation de l'équipement considéré.

7. Dispositif selon la revendication 6, caractérisé en ce que ledit circuit (10) de détection de coïncidence est une porte logique du type "non ET".

8. Dispositif selon la revendication 4, caractérisé en ce que, dans le cas où les coupures d'alimentation consistent en des ruptures de fusibles prévus sur lesdits équipements, lesdits circuits logiques dans l'équipement interrogateur (1) sont alimentés par la tension obtenue en aval du fusible (4) prévu sur cet équipement.

9. Dispositif selon l'une des revendications 5 à 7, caractérisé en ce que dans le cas où les coupures d'alimentation consistent en des ruptures de fusibles prévus sur lesdits équipements, dans chaque équipement répondeur (21,... 2n) le circuit logique (8) à entrée de commande et le circuit (10) de détection de coïncidence sont alimentés par la tension obtenue en amont du fusible (9) prévu sur l'équipement répondeur considéré.

10. Dispositif selon les revendications 7 et 9, caractérisé en ce que le circuit (11) de détection de coupure d'alimentation est constitué par un circuit analogique réalisant une mise simultanée de l'une des entrées de cette porte logique d'une part au potentiel obtenu en aval du fusible (9) de l'équipement considéré, d'autre part au potentiel d'une borne d'une résistance (R2) reliée par son autre borne au potentiel de référence.

11. Dispositif suivant les revendications 4 et 5, caractérisé en ce que ledit circuit (10) de détection de coïncidence reçoit les interrogations relatives à l'équipement répondeur considéré à travers un circuit (12) d'identification de présence de coupure d'alimentation de l'équipement interrogateur à une absence d'interrogation par cet équipement.

12. Dispositif suivant les revendications 7 et 11 , caractérisé en ce que ledit circuit d'identification (12) est constitué par un circuit analogique réalisant une mise simultanée sur l'une des entrées de cette porte logique, d'une part de la sortie du circuit logique correspondant (31,... 3n) de l'équipement interrogateur, d'autre part du potentiel sur une borne d'une résistance (R1) reliée par son autre borne au potentiel de référence.

13. Dispositif suivant les revendications 4 et 5, caractérisé en ce qu'il comporte dans l'équipement interrogateur un circuit (13) de détection de coupure d'alimentation affectant l'équipement répondeur interrogé.

14. Dispositif selon la revendication 13, caractérisé en ce que ledit circuit (13) de détection de coupure d'alimentation affectant l'équipement répondeur interrogé comporte un circuit analogique réalisant une mise en parallèle, sur chaque borne d'entrée de l'équipement interrogateur reliée audit support de transmission commun, d'une résistance (R5) mise par ailleurs à un potentiel déterminé.

15. Dispositif selon l'une des revendications 5 à 7, caractérisé en ce que dans le cas où les coupures d'alimentation consistent en des ruptures de fusibles prévus sur lesdits équipements, le circuit logique à entrée de commande (8) et ledit circuit de détection de coïncidence (10) dans un équipement répondeur sont alimentés simultanément par la tension obtenue en aval du fusible (9) prévu sur l'équipement répondeur considéré et par la tension obtenue en aval du fusible (4) prévu sur l'équipement interrogateur.

16. Dispositif selon l'une des revendications 5 à 7, caractérisé en ce que, dans le cas où les coupures d'alimentation consistent en des ruptures de fusibles prévus sur lesdits équipements, le circuit logique à entrée de commande (8) et ledit circuit de détection de coïncidence (10) dans un équipement répondeur sont alimentés par la tension obtenue en aval d'un fusible qui leur est exclusivement affecté dans l'équipement répondeur considéré.

## Claims

1. Protection device for digital signal transmission systems comprising in at least one terminal equipment (21 ... 2n, 1) of said system a logic circuit (8, 31 ... 3n) adapted to respond to failure of the power supply to the logic circuits forming said equipment by setting the output of said equipment to the high impedance state, characterised in that the output of said equipment is set to the high impedance state in the case where said logic circuit is implemented in a technology that is or is not subject to the self-powering phenomenon and is powered whether the power supply to the equipment in question is absent or present, and in that said logic circuit responds to failure of the power supply to the logic circuits forming said equipment by setting the output of said equipment to a particular potential in the case where said logic circuit is implemented in a technology that is not subject to the self-powering phenomenon and is powered only if the power supply to the equipment concerned is not cut off.

2. Device according to claim 1 characterised in that said logic circuit (31 ... 3n) is an inverter implemented in a technology that is not subject to the self-powering phenomenon and is powered only if the power supply to the equipment in question is absent.

3. Device according to claim 1 characterised in that said logic circuit (8) is implemented in a technology that is or is not subject to the self-powering phenomenon, is powered whether the power supply to the equipment in question is absent or present and has a control input for enabling said circuit or setting is output to the high impedance state, and in that said device further comprises in the equipment in question a circuit (11) for detecting failure of the power supply to said equipment and responding to such power supply failure by commanding setting of the output of the logic circuit with the control input to the high impedance state.

4. Device according to claim 1 for transmission of digital signals between an interrogator equipment (1) and "n" responder equipments (21 ... 2n) interrogated in turn on "n" separate transmission media (51 ... 5n) and responding on a common transmission medium characterised in that it comprises in the interrogator equipment "n" logic circuits (31 ... 3n) implemented in a technology that is not subject to the self-powering phenomenon and powered only if the power supply to the equipment in question is not cut off, each logic circuit being respectively associated with one of said "n" media.

5. Device according to claim 1 for transmitting digital signals between an interrogator equipment 1 and "n" responder equipments (21 ... 2n) interrogated in turn on "n" separate transmission media and responding on a common transmission medium characterised in that it comprises in each responder equipment a logic circuit (8) with a control input and a circuit (11) for detecting power supply failure according to claim 3, and in that said power supply failure detector circuit is connected to the control input of the logic circuit with a control input through a circuit (10) for detecting coincidence of interrogation relating to the responder equipment in question and absence of power failure affecting said equipment, said coincidence detector circuit enabling the logic circuit with the control input if coincidence is detected and setting its output to the high impedance state otherwise.

6. Device according to claim 5 characterised in that said circuit (10) for detecting coincidence is a logic circuit implemented in a technology that is or is not subject to the self-powering phenomenon and powered whether the power supply to the equipment in question is absent or present.

7. Device according to claim 6 characterised in that said circuit (10) for detecting coincidence is a "NAND" type logic gate.

8. Device according to claim 4 characterised in that if the power supply failures are caused by blowing of fuses in said equipments said logic circuits in said interrogator equipment (1) are powered by the voltage at the downstream end of a fuse (4) in said equipment.

9. Device according to any one of claims 5 to 7 characterised in that if the power supply failures are caused by fuses blowing in said equipments the logic circuit (8) with the control input and the circuit (10) for detecting coincidence in each responder equipment (21 ... 2n) are powered by the voltage at the upstream end of the fuse (9) in the responder equipment concerned.

10. Device according to claims 7 and 9 characterised in that the power supply failure detector circuit (11) is an analogue circuit applying simultaneously to an input of said logic gate a potential obtained at the downstream end of the fuse (9) of the equipment in question and the potential at one terminal of a resistor (R2) the other terminal of which is connected to the reference potential.

11. Device according to claims 4 and 5 characterised in that said coincidence detector circuit (10) receives interrogation relating to the responder equipment in question through a circuit (12) for identifying failure of the interrogator equipment power supply through absence of interrogation by said equipment.

12. Device according to claims 7 and 11 characterised in that said identifier circuit (12) is an analogue circuit applying simultaneously to an input of said logic gate the output of the respective logic circuit (31 ... 3n) of the interrogator equipment and the voltage at one terminal of a resistor (R1) the other terminal of which is connected to the reference potential.

13. Device according to claims 4 and 5 characterised in that the interrogator equipment comprises a circuit (13) for detecting failure of the power supply of the interrogated responder equipment.

14. Device according to claim 13 characterised in that said circuit (13) for detecting power failure of the interrogated responder equipment comprises an analogue circuit for parallel connection of a resistor (R5) also connected to a particular potential to each input terminal of the interrogator equipment connected to said common transmission medium.

15. Device according to any one of claims 5 to 7 characterised in that if the power supply failures are caused by blowing of fuses in said equipments the logic circuit (8) with the control input and said coincidence detector circuit (10) in a responder equipment are powered simultaneously by the voltage at the downstream end of the fuse (9) in the responder equipment in question and by the voltage at the downstream end of the fuse (4) in the interrogator equipment.

16. Device according to any one of claims 5 to 7 characterised in that if the power supply failures are caused by blowing of fuses in said equipments the logic circuit (8) with the control input and said coincidence detector circuit (10) in a responder equipment are powered by the voltage at the downstream end of a fuse assigned to them exclusively in the responder equipment in question.

## Patentansprüche

1. Einrichtung zum Schutz eines Systems zur Übertragung digitaler Signale, die in mindestens einem der Endgeräte (2₁, ..2ₙ, 1) des Systems eine logische Schaltung (8, 3₁, .. 3ₙ) aufweist, die im Fall der Unterbrechung der Versorgung der das Gerät bildenden logischen Schaltungen ein Einstellen des Geräts auf eine hohe Impedanz bewirkt, dadurch gekennzeichnet, daß das Einstellen des Ausgangs des Geräts auf eine hohe Impedanz durchgeführt wird, wenn die logische Schaltung in einer Technik ausgeführt ist, die ggf. dem Selbstversorgungsphänomen ausgesetzt ist, und wenn sie bei fehlender und vorliegendener Unterbrechung des das betrachtete Gerät betreffenden Stromversorgung eingespeist wird, und daß die logische Schaltung weiter im Falle der Versorgungsunterbrechung der das betreffende Gerät bildenden logischen Schaltungen den Ausgang des Geräts auf ein bestimmtes Potential bringt, wenn die logische Schaltung in einer dem Selbstversorgungsphänomen nicht unterworfenen Technik ausgeführt ist und sie nur gespeist wird, wenn das betrachtete Gerät keiner Versorgungsunterbrechung unterliegt.

2. Einrichtung nach Anspruch 1, dadurch gekennzeichnet, daß die logische Schaltung (3₁...3ₙ) ein Inverter ist, der in einer dem Selbstversorgungsphänomen nicht ausgesetzten Technik hergestellt ist und der nur gespeist wird, wenn das betrachtete Gerät keiner Versorgungsunterbrechung unterliegt.

3. Einrichtung nach Anspruch 1, dadurch gekennzeichnet, daß die logische Schaltung (8) in einer dem Selbstversorgungsphänomen ggf. ausgesetzten Technik ausgeführt und bei fehlender und vorhandener, das betrachtete Geräte betreffender Versorgungsunterbrechung gespeist wird und daß sie mit einem Steuereingang versehen ist, der entweder ein Einstellen ihres Ausgangs auf eine hohe Impedanz oder eine Freigabe der Schaltung bewirkt, und daß die Einrichtung weiter in dem betrachteten Gerät eine Schaltung (11) zur Erfassung der dieses Gerät betreffenden Versorgungsunterbrechung aufweist, die bei Erfassen der Versorgungsunterbrechung den Ausgang der logischen Schaltung mit Steuereingang auf eine hohe Impedanz bringt.

4. Einrichtung nach Anspruch 1 zur Übertragung digitaler Signale zwischen einem Abfragegerät (1) und "n" Antwortgeräten (2₁...2ₙ), wobei die Antwortgeräte nacheinander über "n" verschiedene Übertragungsträger (5₁...5ₙ) befragt werden und über einen gemeinsamen Übertragungsträger (6) antworten, dadurch gekennzeichnet, daß die Einrichtung im Abfragegerät "n" logische Schaltungen (3₁...3ₙ) aufweist, die in einer dem Selbstversorgungsphänomen nicht ausgesetzten Technik hergestellt sind und nur bei Fehlen der das betrachtete Gerät betreffenden Versorgungsunterbrechung gespeist werden und die je einem der "n" Träger zugewiesen sind.

5. Einrichtung nach Anspruch 1, zur Übertragung digitaler Signale zwischen einem Abfragegerät (1) und "n" Antwortgeräten (2₁...2ₙ), wobei die Antwortgeräte nacheinander über "n" verschiedene Übertragungsträger befragt werden und über einen gemeinsamen Übertragungsträger (6) antworten, dadurch gekennzeichnet, daß jedes Antwortgerät eine logische Schaltung (8) mit Steuereingang und eine Schaltung (11) zur Erfassung der Versorgungsunterbrechung gemäß Anspruch 3 aufweist und daß die Schaltung zur Erfassung der Versorgungsunterbrechung an den Steuereingang der logischen Schaltung mit Steuereingang über eine Schaltung (10) zur Erfassung der Koinzidenz zwischen einer das betrachtete Antwortgerät betreffende Abfrage und einer dieses Gerät betreffenden fehlenden Versorgungsunterbrechung angeschlossen ist, wobei die Koinzidenzerfassungsschaltung bei Koinzidenzerfassung Schaltung mit Steuereingang und im gegenteiligen Fall das Einstellen des Ausgangs auf eine hohe Impedanz auslöst.

6. Einrichtung nach Anspruch 5, dadurch gekennzeichnet, daß die Koinzidenzerfassungsschaltung (10) aus einer logischen Schaltung besteht, die in der dem Selbstversorgungssystem ausgesetzten Technik hergestellt sein kann und die bei fehlender ebenso wie bei vorhandener Versorgungsunterbrechung des betrachteten Geräts gespeist wird.

7. Einrichtung nach Anspruch 6, dadurch gekennzeichnet, daß die Koinzidenzerfassungsschaltung (10) eine logisches Tor vom "NICHT-UND"-Typ ist.

8. Einrichtung nach Anspruch 4, dadurch gekennzeichnet, daß im Falle, daß die Versorgungsunterbrechungen aus dem Ansprechen der in den Geräten vorgesehenen Sicherungen bestehen, die logische Schaltungen im Abfragegerät (1) von der Spannung gespeist werden, die hinter der in dem Gerät vorgesehenen Sicherung (4) erhalten wird.

9. Einrichtung nach einem der Ansprüche 5 bis 7, dadurch gekennzeichnet, daß im Falle, daß die Versorgungsunterbrechungen aus dem Ansprechen der in den Geräten vorgesehenen Sicherungen bestehen, jedes Antwortgerät (2₁..2ₙ der logischen Schaltungen (8) mit Steuereingang und die Koinzidenzerfassungsschaltung (10) von der Spannung gespeist werden, die vor der Sicherung (9) erhalten wird, die am betrachteten Antwortgerät vorgesehen ist.

10. Einrichtung nach den Ansprüchen 7 und 9, dadurch gekennzeichnet, daß die Schaltung (11) zur Erfassung der Versorgungsunterbrechung aus einer analogen Schaltung besteht, die eine gleichzeitige Einstellung eines der Eingänge des logischen Tors einerseits auf das hinter der Sicherung (9) des betrachteten Geräts erhaltene Potential und andererseits auf das Potential eines Widerstands (R2) bewirkt, der mit seiner anderen Klemme an das Bezugspotential angeschlossen ist.

11. Einrichtung nach den Ansprüchen 4 und 5, dadurch gekennzeichnet, daß die Koinzidenzerfassungsschaltung (10) die auf das betrachtete Antwortgerät bezogenen Abfragungen über eine Schaltung (12) zur Erfassung des Vorhandenseins der Versorgungsunterbrechung des Abfragegeräts bei einer fehlenden Abfrage durch dieses Gerät empfängt.

12. Einrichtung nach den Ansprüchen 7 und 11, dadurch gekennzeichnet, daß die Erfassungsschaltung (12) aus einer analogen Schaltung besteht, die gleichzeitig einerseits den Ausgang der entsprechenden logischen Schaltung (3₁...3ₙ) des Abfragegeräts an einen der Eingänge des logischen Tors und andererseits das Potential an einer Klemme eines Widerstands (R1) anlegt, der mit seiner anderen Klemme an das Bezugspotential angeschlossen ist.

13. Einrichtung nach den Ansprüchen 4 und 5, dadurch gekennzeichnet, daß sie im Abfragegerät eine Schaltung (13) zur Erfassung der das befragte Antwortgerät betreffenden Versorgungsunterbrechung aufweist.

14. Einrichtung nach Anspruch 13, dadurch gekennzeichnet, daß die Schaltung (13) zur Erfassung der das befragte Antwortgerät betreffenden Versorgungsunterbrechung eine analoge Schaltung aufweist, die mit jeder Eingangsklemme des an den gemeinsamen Übertragungsträger angeschlossenen Abfragegeräts einen Widerstand (R5) parallelschaltet, der weiter auf ein bestimmtes Potential gesetzt ist.

15. Einrichtung nach einem der Ansprüche 5 bis 7, dadurch gekennzeichnet, daß im Falle, daß die Versorgungsunterbrechungen aus dem Ansprechen der in den Geräten vorgesehenen Sicherungen bestehen, die logische Schaltung (8) mit Steuereingang und die Koinzidenzerfassungsschaltung (10) in einem Antwortgerät sowohl durch die Spannung gespeist werden, die hinter der am betrachteten Antwortgerät vorgesehenen Sicherung (9) erhalten wird, als auch durch die Spannung, die hinter der am Abfragegerät vorgesehenen Sicherung (4) erhalten wird

16. Einrichtung nach einem der Ansprüche 5 bis 7, dadurch gekennzeichnet, daß im Falle, daß die Versorgungsunterbrechungen aus dem Ansprechen der an den Geräten vorgesehenen Sicherungen bestehen, die logische Schaltung (8) mit Steuereingang und die Koinzidenzerfassungsschaltung (10) in einem Antwortgerät gemeinsam durch die Spannung gespeist werden, die hinter einer Sicherung erhalten wird, die ausschließlich den Schaltungen in dem betrachteten Antwortgerät zugewiesen ist.
